# EUROPEAN PATENT SPECIFICATION

(11) **EP 3 723 454 B1**
(45) Date of publication and mention of the grant of the patent: **06.01.2021**
(21) Application number: 19382259.0
(22) Date of filing: 08.04.2019
(51) Int. Cl.: H05B 6/64

(54) **A COOKING DEVICE FOR A MICROWAVE OVEN**
GARVORRICHTUNG FÜR EINEN MIKROWELLENOFEN
DISPOSITIF DE CUISSON POUR FOUR À MICRO-ONDES

(43) Date of publication of application: 14.10.2020
(73) Proprietor: Lékué, SL, 08120 La Llagosta (ES)
(72) Inventor: SEBASTIAN AZPIAZU, Rafael, 08028 L'HOSPITALET DE LLOBREGAT (ES); CORTEGOSO MARQUEZ, Luis, 08011 Barcelona (ES); MANCINI, Guido, 08024 Barcelona (ES)
(74) Representative: Juncosa Miró, Jaime

(56) References cited:
- WO-A1-2008/089100
- ES-U- 1 205 915
- US-A1- 2017 071 402
- US-A1- 2017 150 840

## Description

### Technical field

The present invention concerns to a cooking device for cooking foods in a microwave oven by using the microwave energy generated by the microwave oven to heat a cooking element on which food to be cooked is placed.

### Background art

Document US 7893388 B2 discloses a microwave cooking device for converting microwave energy to heat and applying the heat to a food or other substance, wherein the cooking device comprises a cooking element having a microwave absorbent material and a cooking surface that are in thermal communication with each other.

Document ES 1205915 U discloses a cooking device for a microwave oven comprising a lower assembly and an upper assembly, each having a micro-wave heatable cooking element and two handles made of a thermo-insulating elastic material transparent to microwaves removably attached to opposite end sections of the cooking element, wherein each cooking element comprises a sheet metal plate defining a cooking surface on a first side thereof and a heat absorbing surface on an opposite second side thereof, and an induction layer made of a microwave-absorbing material laid on the heat absorbing surface of the sheet metal plate in thermal contact therewith. elastic retaining elements are provided to retain the lower and upper assemblies joined together in an assembled position in which the respective lower and upper handles are in mutual contact and the cooking surfaces of the respective lower and upper cooking elements are facing each other.

In the cooking device of cited document ES 1205915 U, the sheet metal plate of each cooking element has two opposite end sections not covered with the induction layer, and the handles are removably attached to these opposite end sections. The sheet metal plate has an intricate contour edge section encompassing each end section, and each handle has a complementary intricate housing that matches with the intricate contour edge section of the sheet metal plate to retain the handles removably attached to the cooking element.

A drawback with the cooking device of cited document ES 1205915 U is that the intricate contour edge section of the sheet metal plate is prone to produce electric arcs when submitted to microwave energy and the intricate complementary housing of the handle is difficult to clean so that there is the risk that food particles that could remain in the intricate housing of the handle are carbonized and ignited due to electric arcs produced at the intricate contour edge sections of the sheet metal plate when the cooking device is used with no food in the microwave oven for a short time in order to preheat the cooking elements.

### Disclosure of the invention

The present invention contributes to solve the foregoing and other drawbacks by providing a cooking device for a microwave oven, wherein the cooking device comprises an assembly including a micro-wave heatable cooking element and two handles made of a thermo-insulating material transparent to microwaves removably attached to opposite end sections of the cooking element. The cooking element comprises a sheet metal plate defining a cooking surface on a first side thereof and a heat absorbing surface on an opposite second side thereof, and an induction layer made of a microwave-absorbing material laid on the heat absorbing surface of the sheet metal plate in thermal contact therewith, wherein the sheet metal plate of the cooking element has a smooth continuous perimetral edge with no vertexes and a shaped perimetral region adjacent to the perimetral edge, and wherein the shaped perimetral region is bent towards one side of the sheet metal plate.

The smooth continuous perimetral edge with no vertexes of the sheet metal plate in combination with the shaped perimetral region bent towards one side of the sheet metal plate minimizes the risk of occurrence of electric arcs when the cooking element is submitted to microwave energy.

Preferably, the shaped perimetral region is bent more than 180 degrees towards the second side of the sheet metal plate so that the perimetral edge is facing the heat absorbing surface. Alternatively, the shaped perimetral region is bent more than 180 degrees towards the first side of the sheet metal plate so that the perimetral edge is facing the cooking surface. In other words, the shaped perimetral region is curved down or curved up more than a half turn providing a perimetral partial pipe all along the perimeter of the metal sheet plate. The shaped perimetral region is preferably not covered with the induction layer.

In one embodiment, the sheet metal plate has two opposite end sections not covered with the induction layer, and the handles are removably attached to these opposite end sections. Preferably, the shaped perimetral region of the sheet metal plate defines a smooth continuous curved contour section (viewed in plan view) encompassing each of the opposite end sections. Optionally, the shaped perimetral region of the sheet metal plate defines straight contour sections connecting the ends of the opposite curved contour sections, and the curved contour sections are tangent to the straight contour sections in order to avoid sharp vertexes.

In one embodiment, the sheet metal plate has one or more retaining apertures in each of the opposite end sections, and each retaining aperture has a shaped edge bent towards one side of the sheet metal plate. For example, the shaped edge of the retaining apertures is bent towards a side of the sheet metal plate opposite the side towards which the shaped perimetral region is bent.

Optionally, the cooking surface of the sheet metal plate has a central depressed cooking region having a flat bottom with parallel ridges as is conventional in the prior art.

Preferably, each handle has a smooth continuous arched groove complementary of the curved contour section of the shaped perimetral region of the sheet metal plate. More preferably, the handles are made of an elastic material, such as silicone, and the arched groove has an inner space and an entrance slit narrower than the inner space so that the handle can be attached to and detached from the cooking element by elastic deformation and recovery of the entrance slit of the arched groove.

The shape of the smooth continuous arched groove in combination with the nature of the elastic material makes the handle, once separated from the cooking element, very easy to clean so that the risk of food particles remaining in the arched groove is greatly reduced.

Each handle has preferably a covering section extending over the corresponding end section of the sheet metal plate and a retaining protrusion configured to be inserted in the retaining aperture. For example, the retaining protrusion comprises a retaining head connected to the covering section by a connection shank, with the retaining head being wider than the retaining aperture and the connecting shank being thinner than the retaining aperture, thereby the retaining protrusion can be inserted in and removed from the retaining aperture by elastic deformation and recovery of the retaining head.

In one embodiment, the assembly is a lower assembly, the cooking element is a lower cooking element and the handles are lower handles, and the cooking device further comprising an upper assembly including a micro-wave heatable upper cooking element and two upper handles made of a thermo-insulating material transparent to microwaves removably attached to opposite end sections of the upper cooking element. The upper cooking element has the same features than the lower cooking element as explained above and the upper handles have the same features than the lower handles as explained above. Optionally, the lower and upper cooking elements may be identical. Optionally, the lower and upper handles may be identical.

In this embodiment including lower and upper assemblies, the cooking device further comprises elastic retaining elements configured to retain the lower and upper assemblies joined together in an assembled position in which the respective lower and upper handles are in contact to one another and the cooking surfaces of the respective lower and upper cooking elements are facing each other without contact.

In use, the food is placed on the cooking surface of the lower cooking element of the lower assembly, the upper assembly is placed over the lower assembly with the cooking surface of the upper cooking element facing the food, the elastic retaining elements are installed to keep the lower and upper assemblies joined together, and the cooking device with the food between the cooking surfaces of the lower and upper cooking elements of the lower and upper assemblies is subjected to microwave energy in the microwave oven to cook the food from both sides.

In the assembled position, the cooking surfaces of the lower and upper cooking elements are separated by a predetermined distance. If the food to be cooked is thicker than the predetermined distance, then the elastic retaining elements are elastically yield allowing the lower and upper assemblies to be separated to a distance enough to accommodate the food while exerting a certain pressure thereon.

Preferably, the lower and upper handles include positioning elements that match with one another when the lower and upper assemblies are in the assembled position in order to correctly positioning the lower and upper assemblies in the assembled position. In one embodiment, the retaining heads of the retaining protrusions of the lower handles have a convex top surface that fits in a concave top surface of the retaining heads of the retaining protrusions of the upper handles when the lower and upper assemblies are joined in the assembled position.

### Brief description of the drawings

The present invention will be more fully understood from a detailed description of an illustrative and non-limitative preferred embodiment with reference to the accompanying drawings, in which:
Fig. 1 is a perspective view of a cooking device for a microwave oven according to an embodiment of the present invention, including a lower assembly, an upper assembly and elastic retaining elements, in an assembled position;
Fig. 2 is a side view of the cooking device of Fig. 1;
Fig. 3 is a top plan view of the cooking device of Fig. 1;
Fig. 4 is a cross-sectional view taken by the plane indicated IV-IV in Fig. 3;
Fig. 5 is a cross-sectional view taken by the plane indicated V-V in Fig. 3;
Fig. 6 is a top plan view of a lower cooking element belonging to the lower assembly, which is identical to an upper cooking element belonging to the upper assembly;
Fig. 7 is a cross-sectional view taken by the plane indicated VII-VII in Fig. 6;
Fig. 8 is a cross-sectional view taken by the plane indicated VIII-VIII in Fig. 6;
Fig. 9 is a cross-sectional view taken by the plane indicated IX-IX in Fig. 6;
Fig. 10 is a perspective view of one lower handle belonging to the lower assembly, showing an upper and inner side thereof;
Fig. 11 is a perspective view of the lower handle showing a lower and outer side thereof;
Fig. 12 is a front view of the lower handle showing the inner side thereof;
Fig. 13 is a cross-sectional view taken by the plane indicated XIII-XIII in Fig. 12;
Fig. 14 is a cross-sectional view taken by the plane indicated XIV-XIV in Fig. 12;
Fig. 15 is a perspective view of one upper handle belonging to the upper assembly, showing a lower and outer side thereof;
Fig. 16 is a perspective view of the upper handle showing an upper and inner side thereof;
Fig. 17 is a front view of the upper handle showing the inner side thereof;
Fig. 18 is a cross-sectional view taken by the plane indicated XVIII-XVIII in Fig. 17;
Fig. 19 is a cross-sectional view taken by the plane indicated XIX-XIX in Fig. 17; and
Fig. 20 is a perspective view of one of the elastic retaining elements;

### Detailed description of a preferred embodiment

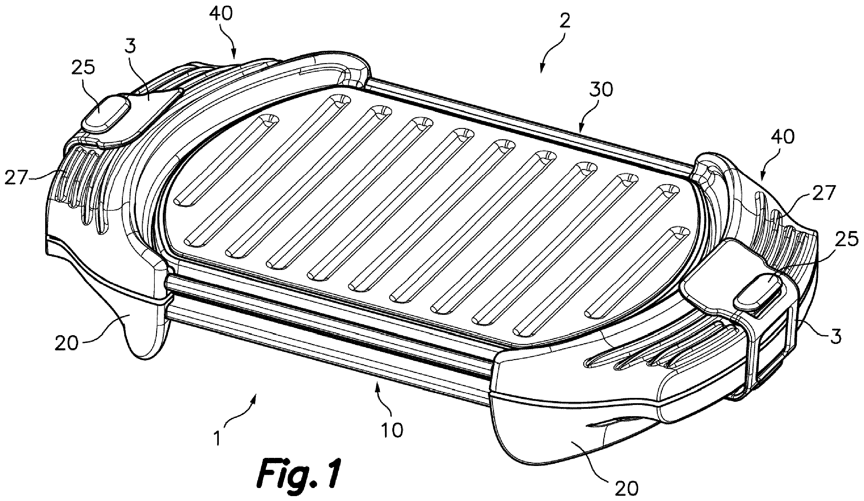

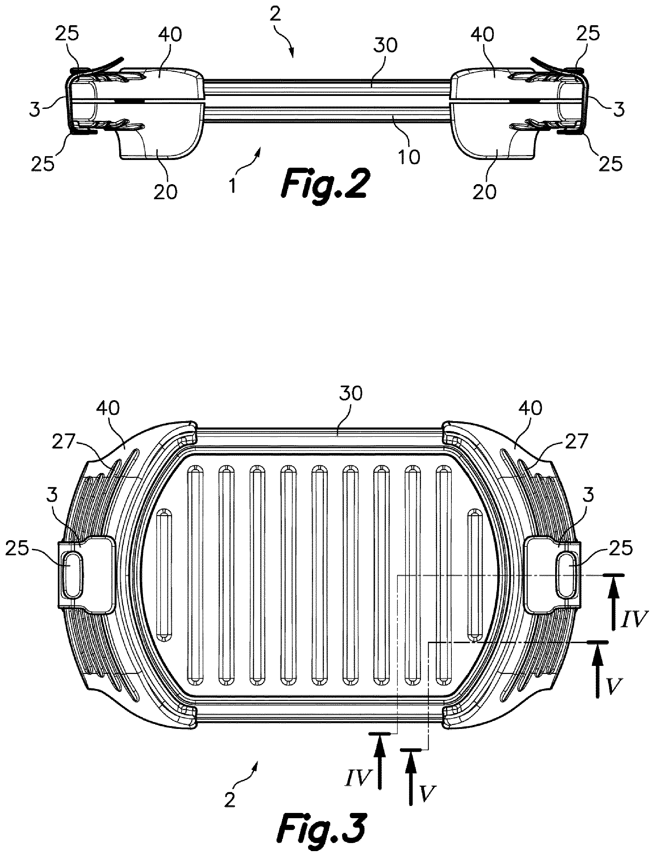

Referring first to Figs. 1 to 3, a cooking device for a microwave oven according to an embodiment of the present invention is shown, which is comprised of a lower assembly 1, an upper assembly 2 and elastic retaining elements 3.

The lower assembly 1 comprises a micro-wave heatable lower cooking element 10 and two lower handles 20 made of a thermo-insulating elastic material transparent to microwaves removably attached to opposite end sections of the lower cooking element 10.

The upper assembly 2 comprises a micro-wave heatable upper cooking element 30 and two upper handles 40 made of a thermo-insulating elastic material transparent to microwaves removably attached to opposite end sections of the upper cooking element 30.

The elastic retaining elements 3 are configured to retain the lower and upper assemblies 1, 2 joined together in an assembled position shown in Figs. 1 to 3 as will be explained in greater detail below.

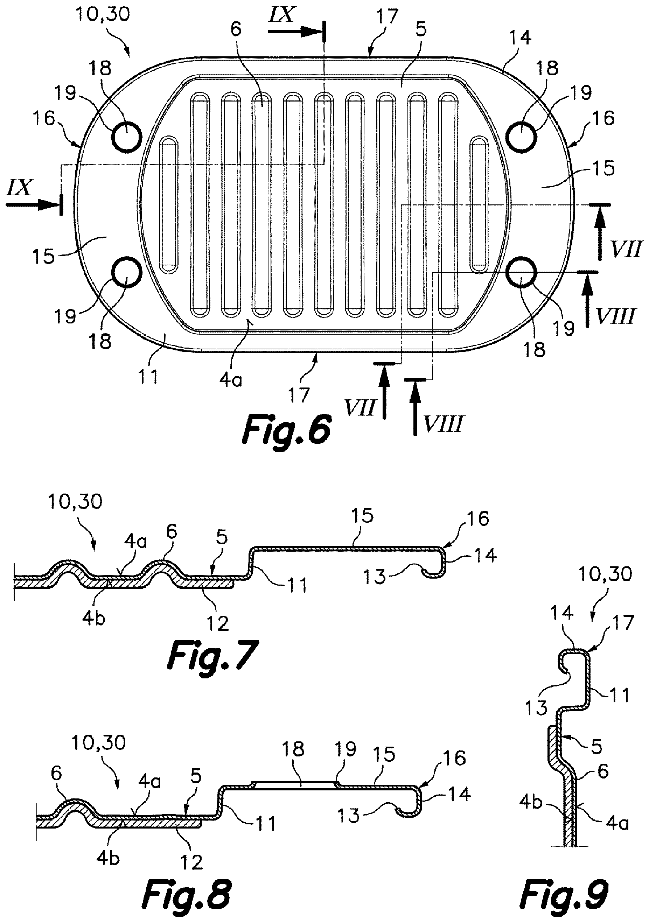

Fig. 6 separately shows the lower cooking element 10, which in this embodiment is identical to the upper cooking element 30. As better shown in Figs. 7 to 9, the cooking element 10, 30 comprises a sheet metal plate 11 defining a cooking surface 4a on a first side thereof and a heat absorbing surface 4b on an opposite second opposite side thereof, and an induction layer 12 made of a microwave-absorbing material laid on the heat absorbing surface 4b of the sheet metal plate 11 in thermal contact therewith. The sheet metal plate 11 is made, for example, of iron with an aluminium coating and the induction layer 12 is made for example of silicone with ferrite charges.

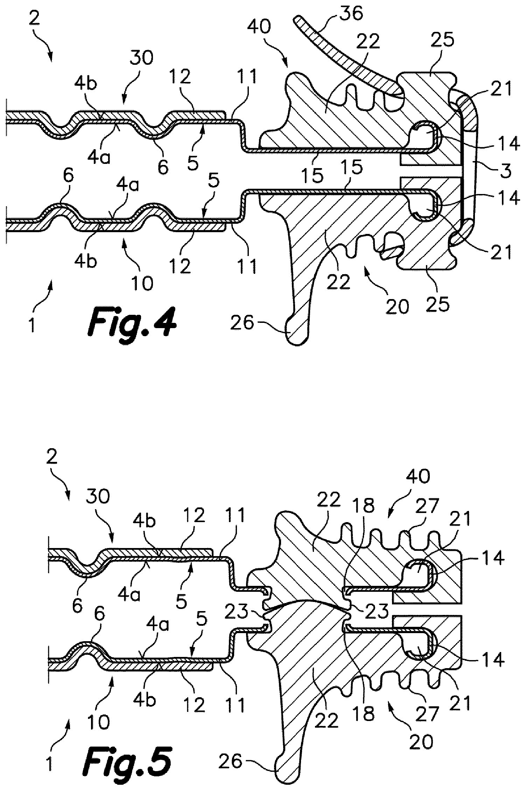

As better shown in Figs. 4 and 5, in the lower cooking element 10 the cooking surface 4a is on the upper side and the heat absorbing surface 4b with the induction layer 12 is on the lower side of the sheet metal plate 11, and inversely in the upper cooking element 30, the cooking surface 4a is in the lower side and the heat absorbing surface 4b with the induction layer 12 is on the upper side of the sheet metal plate 11. In both the lower and upper cooking elements 10, 30, the cooking surface 4a of the sheet metal plate 11 has a central depressed cooking region having a flat bottom 5 with parallel ridges 6.

The sheet metal plate 11 has a smooth continuous perimetral edge 13 with no vertexes and a shaped perimetral region 14 not covered with the induction layer 12 adjacent to the perimetral edge 13. The shaped perimetral region 14 is bent more than 180 degrees towards one side of the sheet metal plate 11 corresponding to the heat absorbing surface 4b, so that the perimetral edge 13 is facing the heat absorbing surface 4b. In other words, the shaped perimetral region 14 is curved towards the heat absorbing surface 4b forming a partial pipe all around the whole perimeter of the sheet metal plate 11.

The sheet metal plate 11 has two opposite end sections 15 not covered with the induction layer 12, and the lower handles 20 are removably attached to the opposite end sections 15 as better shown in Figs, 4 and 5. The shaped perimetral region 14 of the sheet metal plate 11 defines a smooth continuous curved contour section 16 encompassing each of the opposite end sections 15 and two straight contour sections 17 connecting the ends of the curved contour sections 16. The curved contour sections 16 are tangent to the straight contour sections 17 so that no sharp vertexes are present in the perimetral edge 13 and shaped perimetral region 14.

The sheet metal plate 11 has a pair of retaining apertures 18 formed in each of the opposite end sections 15. Each retaining aperture 18 has a shaped edge 19 bent towards one side of the sheet metal plate 11, for example towards the side of the sheet metal plate 11 corresponding to the cooking surface 4a.

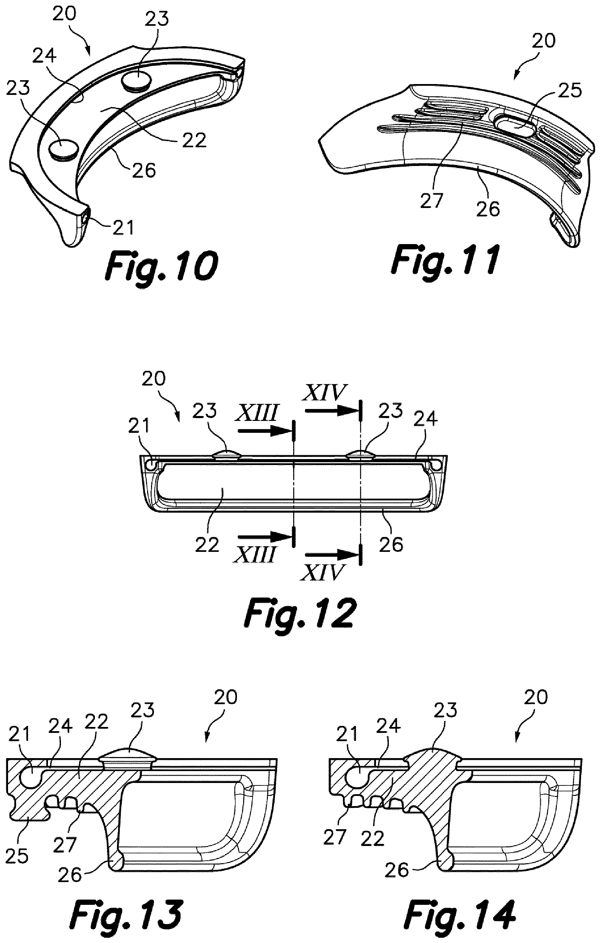

As shown in Figs 13 to 22, each of the lower and upper handles 20, 40 has a smooth continuous arched groove 21 comprising an inner space and an entrance slit 24 narrower than the inner space. The inner space of the arched groove 21 is complementary to the curved contour sections 16 of the shaped perimetral region 14 of the sheet metal plate 11, and the inner space of the arched groove 21 receives the curved contour sections 16 of the shaped perimetral region 14 by elastic deformation and recovery of the entrance slit 24 when the lower or upper handle 20, 30 is removably attached to the corresponding sheet metal plate 11.

As better shown in Figs. 4 and 5, each of the lower and upper handles 20, 40 has a covering section 22 extending on the corresponding end section 15 of the sheet metal plate 11 and a pair of retaining protrusions 23 projecting from the covering section 22 and configured to be inserted in the retaining apertures 18 of the corresponding sheet metal plate 11. Each retaining protrusion 23 comprises a retaining head connected to the covering section 22 by a connection shank. The retaining head is wider than the retaining aperture 18 and the connecting shank is thinner than the retaining aperture 18. The retaining protrusion 23 is inserted in and removed from the retaining aperture 18 by elastic deformation and recovery of the retaining head.

Each of the lower and upper handles 20, 40 further has a hooking post 25 located at central region thereof and each of the elastic retaining elements 3 is configured to be hooked to the hooking posts 25 of the lower and upper handles 20, 40 in order to retain the lower and upper assemblies 1, 2 joined together in the assembled position shown in Figs. 1 to 3. In the assembled position, the respective lower and upper handles 20, 40 are in mutual contact and the cooking surfaces 4a of the respective lower and upper cooking elements 10, 30 are facing each other without contact.

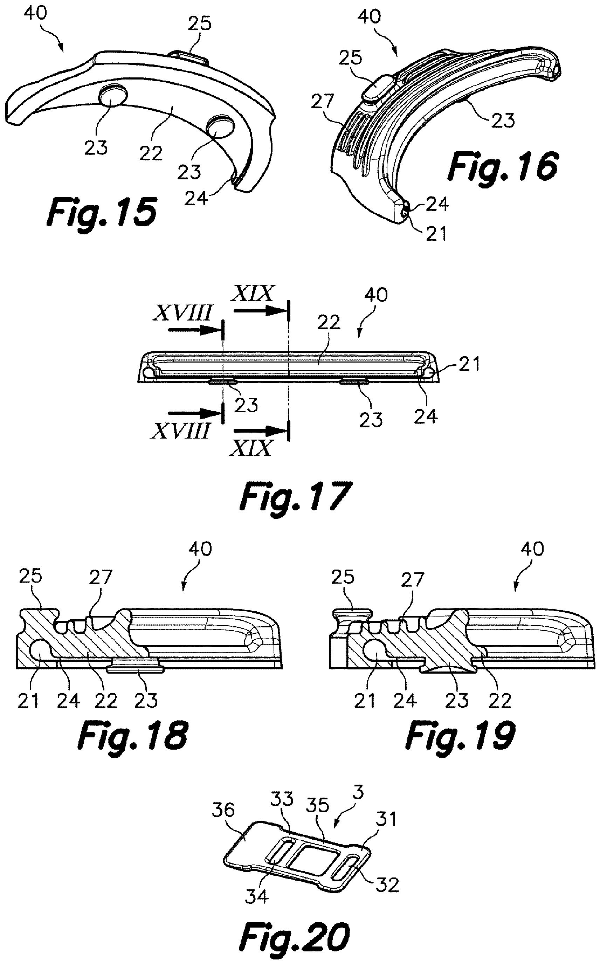

As shown in Fig. 20 each of the elastic retaining elements 3 is made of an elastic material, such as silicone, and has a lower section 31 where a lower hooking aperture 32 is formed, an upper section where 33 where an upper hooking aperture 34 is formed, and two connection strands 35 connecting the lower section 31 to the upper section 33. The upper section 33 extends into a grip section 36. The lower and upper hooking apertures 32, 34 are configured to be hooked to the hooking posts 25 of the lower and upper handles 20, 40.

The retaining heads of the retaining protrusions 23 of the lower handles 20 have a convex top surface that fits in a concave top surface of the retaining heads of the retaining protrusions 23 of the upper handles 40 when the lower and upper assemblies 1, 2 are joined in the assembled position, as better shown in Fig. 5.

Each of the lower handles 20 has a support element 26 configured to support the cooking device on a support surface. Each of the lower and upper handles 20, 40 has surface reliefs 27 for improving the grip and reducing heat transfer.

It is to be understood that while the device is designed to cook food on two sides thereof by using the upper and lower assemblies 1, 2 joined together by the elastic retaining elements 3 in the microwave oven, the food may be cooked on one side thereof by using only the lower assembly 1 in the microwave oven.

The scope of the invention is defined in the attached claims.

## Claims

1. A cooking device for a microwave oven, the cooking device comprising an assembly (1) including a micro-wave heatable cooking element (10) and two handles (20) made of a thermo-insulating material transparent to microwaves removably attached to opposite end sections of the cooking element (10), the cooking element (10) comprising:
a sheet metal plate (11) defining a cooking surface (4a) on a first side thereof and a heat absorbing surface (4b) on an opposite second side thereof; and
an induction layer (12) made of a microwave-absorbing material laid on the heat absorbing surface (4b) of the sheet metal plate (11) in thermal contact therewith,
**characterized in that**:
the sheet metal plate (11) of the cooking element (10) has a smooth continuous perimetral edge (13) with no vertexes and a shaped perimetral region (14) adjacent to the perimetral edge (13), the shaped perimetral region (14) being bent towards one side of the sheet metal plate (11).

2. The cooking device according to claim 1, wherein the shaped perimetral region (14) is bent more than 180 degrees towards the second side of the sheet metal plate (11) and the perimetral edge (13) is facing the heat absorbing surface (4b) or is bent more than 180 degrees towards the first side of the sheet metal plate (11) and the perimetral edge (13) is facing the cooking surface (4a).

3. The cooking device according to claim 1 or 2, wherein the shaped perimetral region (14) is not covered with the induction layer (12).

4. The cooking device according to claim 1, 2 or 3, wherein the sheet metal plate (11) has two opposite end sections (15) not covered with the induction layer (12), and the handles (20) are removably attached to the opposite end sections (15).

5. The cooking device according to claim 4, wherein the shaped perimetral region (14) of the sheet metal plate (11) defines a smooth continuous curved contour section (16) encompassing each of the opposite end sections (15).

6. The cooking device according to claim 4, wherein the shaped perimetral region (14) of the sheet metal plate (11) defines straight contour sections (17) connecting the ends of the curved contour sections (16), the curved contour sections (16) being tangent to the straight contour sections (17).

7. The cooking device according to claim 4, 5 or 6, wherein the sheet metal plate (11) has at least one retaining aperture (18) in each of the opposite end sections (15), the retaining aperture (18) having a shaped edge (19) bent towards one side of the sheet metal plate (11).

8. The cooking device according to any one of claims 4 to 7, wherein the cooking surface (4a) of the sheet metal plate (11) has a central depressed cooking region having a flat bottom (5) with parallel ridges (6).

9. The cooking device according to claim 5, wherein each handle (20) has a smooth continuous arched groove (21) complementary of the curved contour section (16) of the shaped perimetral region (14) of the sheet metal plate (11).

10. The cooking device according to claim 9, wherein the handles (20) are made of an elastic material and the arched groove (21) has an inner space and an entrance slit (24) narrower than the inner space configured to receive the curved contour section (16) of the shaped perimetral region (14) of the sheet metal plate (11) by elastic deformation and recovery of the handle (20).

11. The cooking device according to claim 7, wherein each handle (20) has a covering section (22) extending on the corresponding end section (15) of the sheet metal plate (11) and a retaining protrusion (23) configured to be inserted in the retaining aperture (18).

12. The cooking device according to claim 7, wherein the retaining protrusion (23) comprises a retaining head connected to the covering section (22) by a connection shank, wherein the retaining head is wider than the retaining aperture (18) and the connecting shank is thinner than the retaining aperture (18).

13. The cooking device according to any one of claims 1 to 12, wherein the assembly (1) is a lower assembly (1), the cooking element (10) is a lower cooking element (10) and the handles (20) are lower handles (20), the cooking device further comprising an upper assembly (2) including a micro-wave heatable upper cooking element (30) and two upper handles (40) made of a thermo-insulating material transparent to microwaves removably attached to opposite end sections of the upper cooking element (30), wherein the upper cooking element (30) has the same features than the lower cooking element (10) as defined in claims 1 to 8 and wherein the upper handles (40) have the same features than the lower handles (20) as defined in claims 9 to 12.

14. The cooking device according to claim 13, further comprising elastic retaining elements (3) configured to retain the lower and upper assemblies (1, 2) joined together in an assembled position in which the respective lower and upper handles (20, 40) are in mutual contact and the cooking surfaces (4a) of the respective lower and upper cooking elements (10, 30) are facing each other without contact.

15. The cooking device according to claim 14, wherein the retaining heads of the retaining protrusions (23) of the lower handles (20) have a convex top surface that fits in a concave top surface of the retaining heads of the retaining protrusions (23) of the upper handles (20) when the lower and upper assemblies (1, 2) are joined in the assembled position.

## Patentansprüche

1. Garvorrichtung für einen Mikrowellenofen, wobei die Garvorrichtung eine Baugruppe (1) mit einem durch Mikrowellen erhitzbaren Garelement (10) und zwei Griffen (20) aus einem für Mikrowellen durchlässigen wärmeisolierenden Material, die abnehmbar an gegenüberliegenden Endabschnitten des Garelements (10) angebracht sind, aufweist, wobei das Garelement (10) Folgendes umfasst:
eine Metallplatte (11), die auf einer ersten Seite derselben eine Kochfläche (4a) und auf einer gegenüberliegenden zweiten Seite derselben eine wärmeabsorbierende Oberfläche (4b) aufweist; und
eine auf der wärmeabsorbierenden Oberfläche (4b) der Metallplatte (11) aufgebrachte Induktionsschicht (12) aus einem mikrowellenabsorbierenden Material, die in thermischem Kontakt mit derselben steht,
**dadurch gekennzeichnet, dass**:
die Metallplatte (11) des Garelements (10) eine durchgängige, glatte umlaufende Kante (13) ohne Scheitelpunkte und einen an die umlaufende Kante (13) angrenzenden profilierten Umrandungsbereich (14) aufweist, wobei der profilierte Umrandungsbereich (14) zu einer Seite der Metallplatte (11) hin gebogen ist.

2. Garvorrichtung nach Anspruch 1, wobei der profilierte Umrandungsbereich (14) um mehr als 180 Grad zur zweiten Seite der Metallplatte (11) hin gebogen ist und die umlaufende Kante (13) der wärmeabsorbierenden Oberfläche (4b) zugewandt ist oder um mehr als 180 Grad zur ersten Seite der Metallplatte (11) hin gebogen ist und die umlaufende Kante (13) der Kochfläche (4a) zugewandt ist.

3. Garvorrichtung nach Anspruch 1 oder 2, wobei der profilierte Umrandungsbereich (14) nicht mit der Induktionsschicht (12) bedeckt ist.

4. Garvorrichtung nach Anspruch 1, 2 oder 3, wobei die Metallplatte (11) zwei gegenüberliegende, nicht mit der Induktionsschicht (12) bedeckte Endabschnitte (15) aufweist und die Griffe (20) abnehmbar an den gegenüberliegenden Endabschnitten (15) befestigt sind.

5. Garvorrichtung nach Anspruch 4, wobei der profilierte Umrandungsbereich (14) der Metallplatte (11) einen durchgängigen, glatten gekrümmten Konturabschnitt (16) aufweist, der jeweils die gegenüberliegenden Endabschnitte (15) umschließt.

6. Garvorrichtung nach Anspruch 4, wobei der profilierte Umrandungsbereich (14) der Metallplatte (11) gerade Konturabschnitte (17) zur Verbindung der Enden der gekrümmten Konturabschnitte (16) aufweist, wobei die gekrümmten Konturabschnitte (16) tangential zu den geraden Konturabschnitten (17) verlaufen.

7. Garvorrichtung nach Anspruch 4, 5 oder 6, wobei die Metallplatte (11) mindestens eine Halteöffnung (18) in jedem der gegenüberliegenden Endabschnitte (15) aufweist, wobei die Halteöffnung (18) eine zu einer Seite der Metallplatte (11) hin gebogene, profilierte Kante (19) aufweist.

8. Garvorrichtung nach einem der Ansprüche 4 bis 7, wobei die Kochfläche (4a) der Metallplatte (11) einen mittigen vertieften Kochbereich mit einem flachen Boden (5) mit parallelen Rippen (6) aufweist.

9. Garvorrichtung nach Anspruch 5, wobei jeder Griff (20) eine durchgängige, glatte bogenförmige Rille (21) aufweist, die komplementär zu dem gekrümmten Konturabschnitt (16) des profilierten Umrandungsbereichs (14) der Metallplatte (11) ist.

10. Garvorrichtung nach Anspruch 9, wobei die Griffe (20) aus einem elastischen Material bestehen und die bogenförmige Rille (21) einen Innenbereich und einen im Vergleich zum Innenbereich verengten Einführschlitz (24) aufweist und so ausgebildet ist, dass sie durch elastische Verformung und Rückverformung des Griffs (20) den gekrümmten Konturabschnitt (16) des profilierten Umrandungsbereichs (14) der Metallplatte (11) aufnimmt.

11. Garvorrichtung nach Anspruch 7, wobei jeder Griff (20) einen sich auf den entsprechenden Endabschnitt (15) der Metallplatte (11) erstreckenden Abdeckabschnitt (22) und einen zum Einfügen in die Halteöffnung (18) ausgebildeten Haltevorsprung (23) aufweist.

12. Garvorrichtung nach Anspruch 7, wobei der Haltevorsprung (23) einen durch einen Verbindungsschaft mit dem Abdeckabschnitt (22) verbundenen Haltekopf aufweist, wobei der Haltekopf breiter als die Halteöffnung (18) und der Verbindungsschaft schmaler als die Halteöffnung (18) ist.

13. Garvorrichtung nach einem der Ansprüche 1 bis 12, wobei die Baugruppe (1) eine untere Baugruppe (1) ist, das Garelement (10) ein unteres Garelement (10) ist und die Griffe (20) untere Griffe (20) sind, wobei die Garvorrichtung ferner eine obere Baugruppe (2) umfasst, die ein durch Mikrowellen erhitzbares oberes Garelement (30) und zwei obere Griffe (40) aus einem für Mikrowellen durchlässigen wärmeisolierenden Material aufweist, die abnehmbar an gegenüberliegenden Endabschnitten des oberen Garelements (30) angebracht sind, wobei das obere Garelement (30) die gleichen Merkmale wie das untere Garelement (10) laut Definition in den Ansprüchen 1 bis 8 aufweist und wobei die oberen Griffe (40) die gleichen Merkmale wie die unteren Griffe (20) laut Definition in den Ansprüchen 9 bis 12 aufweisen.

14. Garvorrichtung nach Anspruch 13, die ferner elastische Halteelemente (3) umfasst, die so ausgebildet sind, dass sie die untere und die obere Baugruppe (1, 2) in einer zusammengefügten Position, in der sich der untere und der obere Griff (20, 40) gegenseitig berühren und die Kochflächen (4a) des unteren und des oberen Kochelements (10, 30) einander berührungslos zugewandt sind, aneinander halten.

15. Garvorrichtung nach Anspruch 14, wobei die Halteköpfe der Haltevorsprünge (23) der unteren Griffe (20) eine konvexe Oberseite aufweisen, die bei Verbindung der unteren und oberen Baugruppen (1, 2) in der zusammengefügten Position in eine konkave Oberseite der Halteköpfe der Haltevorsprünge (23) der oberen Griffe (20) eingreift.

## Revendications

1. Appareil de cuisson pour un four micro-onde, l'appareil de cuisson comportant un assemblage (1) comprenant un élément de cuisson (10) chauffable de micro-ondes et deux anses (20) faites en un matériau transparent isolant thermique aux micro-ondes, fixées amovibles aux sections d'extrémité opposées de l'élément de cuisson (10), l'élément de cuisson (10) comportant :
une plaque en tôle (11) définissant une surface de cuisson (4a) sur un premier de ses côtés et une surface d'absorption de chaleur (4b) sur un deuxième de ses côtés opposés ; et
une couche d'induction (12), faite en un matériau absorbeur de micro-ondes, étendue sur la surface d'absorption de chaleur (4b) de la plaque en tôle (11) en contact thermique avec elle,
**caractérisé en ce que** :
la plaque en tôle (11) de l'élément de cuisson (10) possède un bord périmétrique (13) continu, lisse, sans sommets et une région en forme périmétrique (14) adjacente au bord périmétrique (13) la région en forme périmétrique (14) étant courbée vers un côté de la plaque en tôle (11).

2. L'appareil de cuisson conformément à la revendication 1, où la région en forme périmétrique (14) est courbée de plus de 180 degrés vers le deuxième côté de la plaque en tôle (11) et le bord périmétrique (13) fait face à la surface d'absorption de chaleur (4b) ou est courbé à plus de 180 degrés vers le premier côté de la plaque en tôle (11) et le bord périmétrique (13) fait face à la surface de cuisson (4a).

3. L'appareil de cuisson conformément à la revendication 1 ou 2, où la région en forme périmétrique (14) n'est pas couverte par la couche d'induction (12).

4. L'appareil de cuisson conformément à la revendication 1, 2 ou 3, où la plaque en tôle (11) possède deux sections d'extrémité (15) opposées non couvertes par la couche d'induction (12) et les anses (20) sont fixées amovibles aux sections d'extrémité opposées (15).

5. L'appareil de cuisson conformément à la revendication 4, où la région en forme périmétrique (14) de la plaque en tôle (11) définit une section à contour continu lisse (16) encerclant chacune des sections d'extrémité opposées (15).

6. L'appareil de cuisson conformément à la revendication 4, où la région en forme périmétrale (14) de la plaque en tôle (11) définit des sections à contour droit (17) connectant les extrémités des sections à contour courbé (16), les sections à contour courbé (16) étant tangentes aux sections à contour droit (17).

7. L'appareil de cuisson conformément à la revendication 4, 5 ou 6, où la plaque en tôle (11) possède au moins une ouverture de rétention (18) dans chacune des sections d'extrémité opposées (15), l'ouverture de rétention (18) ayant un bord formé (19) courbé vers un côté de la plaque en tôle (11).

8. L'appareil de cuisson conformément à une quelconque des revendications 4 à 7, où la surface de cuisson (4a) de la plaque en tôle (11) possède une région de cuisson centrale affaissée ayant un fond plat (5) ayant des crêtes parallèles (6).

9. L'appareil de cuisson conformément à la revendication 5, où chaque anse (20) possède une cannelure arquée, continue, lisse (21) complémentaire de la section à contour courbé (16) de la région en forme périmétrique (14) de la plaque en tôle (11).

10. L'appareil de cuisson conformément à la revendication 9, où les anses (20) sont faites en un matériau élastique et la cannelure arquée (21) possède un espace intérieur et une fente d'entrée (24) plus étroits que l'espace intérieur configuré pour recevoir la section de contour courbée (16) de la région en forme périmétrique (14) de la plaque en tôle (11) par déformation élastique et récupération de l'anse (20).

11. L'appareil de cuisson conformément à la revendication 7, où chaque anse (20) possède une section de couverture (22) s'étendant sur la section d'extrémité correspondante (15) de la plaque en tôle (11) et une protubérance (23) de rétention configurée pour être insérée dans l'ouverture de rétention (18).

12. L'appareil de cuisson conformément à la revendication 7, où la protubérance de rétention (23) comporte une tête de rétention connectée à la section de couverture (22) par une tige de connexion, où la tête de rétention est plus large que l'ouverture de rétention (18) et la tige de connexion est plus étroite que l'ouverture de rétention (18).

13. L'appareil de cuisson conformément à une quelconque des revendications 1 à 12, où l'assemblage (1) est un assemblage inférieur (1), l'élément de cuisson (10) est un élément de cuisson inférieur (10) et les anses (20) sont des anses inférieures (20), le dispositif de cuisson comportant en outre un assemblage supérieur (2) comprenant un élément de cuisson (30) supérieur chauffable par micro-ondes et deux anses supérieures (40) faites en un matériau transparent isolant thermique aux micro-ondes, fixées amovibles aux sections d'extrémité opposées de l'élément de cuisson supérieur (30), où l'élément de cuisson supérieur (30) possède les mêmes particularités que l'élément de cuisson inférieur (10) tel que défini dans les revendications 1 à 8 et où les anses supérieures (40) ont les mêmes particularités que les anses inférieures (20) tel que défini dans les revendications 9 à 12.

14. L'appareil de cuisson conformément à la revendication 13, comportant en outre des éléments de rétention élastiques (3) configurés pour retenir les assemblages inférieur et supérieur (1,2) unis ensembles dans une position d'assemblage dans laquelle les anses inférieure et supérieure respectives (20, 40) sont en contact mutuel et les surfaces de cuisson (4a) des éléments de cuisson inférieur et supérieur (10,30) respectifs se font face sans contact.

15. L'appareil de cuisson conformément à la revendication 14, où les têtes de rétention des protubérances de rétention (23) des anses inférieures (20) possèdent une surface supérieure convexe qui s'adapte à une surface supérieure concave des têtes de rétention des protubérances de rétention (23) des anses supérieures (20) lorsque les assemblages inférieur et supérieur (1,2) sont unis en position d'assemblage.
